# FASCICULE DE BREVET EUROPEEN

(11) **EP 3 049 375 B1**
(45) Date de publication et mention de la délivrance du brevet: **31.03.2021**
(21) Numéro de dépôt: 14796192.4
(22) Date de dépôt: 25.09.2014
(51) Int. Cl.: C04B 28/04, C04B 40/06, C04B 103/00, C04B 103/60, C04B 111/00, C04B 111/20, C04B 111/60

(54) **PRODUIT DE FINITION D'UN SOL EXTERIEUR EN BETON FRAICHEMENT COULE, ASSURANT UNE PROTECTION CONTRE LES EFFETS DES CYCLES DE GEL-DEGEL EN PRESENCE DE SELS DE DEVERGLACAGE**
PRODUKT ZUR OBERFLÄCHENBEHANDLUNG EINES BODENS IM AUSSENBEREICH AUS FRISCHGUSSBETON ZUM SCHUTZ GEGEN DIE EINWIRKUNG VON GEFRIER-AUFTAU-ZYKLEN IN GEGENWART VON TAUSALZEN
FINISHING PRODUCT FOR AN EXTERIOR FLOOR MADE OF FRESHLY POURED CONCRETE, PROVIDING PROTECTION AGAINST THE EFFECTS OF FREEZE-THAW CYCLES IN THE PRESENCE OF DE-ICING SALTS

(30) Priorité: 26.09.2013 FR 1359269
(43) Date de publication de la demande: 03.08.2016
(73) Titulaire: SA Sols, 26250 Livron-sur-Drome (FR)
(72) Inventeur: PELISSIER, Mickael, 26250 Livron-sur-Drome (FR)
(74) Mandataire: Roman, Alexis
(86) Numéro de dépôt international: PCT/FR2014/052400
(87) Numéro de publication internationale: WO 2015/044593

(56) Documents cités:
- WO-A1-99/57076
- WO-A1-2012/084401
- WO-A2-2012/023874
- DE-A1-102010 003 919
- GB-A- 2 262 521
- KR-A- 20050 040 898

## Description

### Domaine technique de l'invention.

La présente invention concerne un produit de finition d'un sol extérieur en béton fraîchement coulé, assurant une protection dudit sol contre les effets des cycles de gel-dégel en présence de sels de déverglaçage.

La présente invention concerne également un procédé de traitement d'une dalle de béton fraîchement coulée à l'aide dudit produit de finition en vue de protéger la surface exposée de ladite dalle contre l'écaillage causé notamment par les cycles de gel-dégel en présence de sels de déverglaçage.

Elle vise également un sol extérieur en béton revêtu d'une couche dudit produit de finition.

Le domaine technique auquel se rapporte la présente invention est celui de l'aménagement des sols en béton, en particulier de sols extérieurs en béton.

### État de la technique.

Le béton est un matériau composite essentiellement réalisé à partir d'eau, de ciment et d'agrégats, et le cas échéant d'adjuvants et/ou de fibres. Il renferme aussi des vides ou pores capillaires dus, entre autres à l'eau excédentaire. Il est l'un des matériaux les plus utilisés au monde pour la construction de bâtiments et pour la fabrication de sols, notamment de sols extérieurs.

Par « sol(s) extérieur(s) » en béton, on entend selon la présente invention les aménagements urbains extérieurs affectés ou non à la circulation des véhicules. A titre d'exemples non limitatifs de tels sols extérieurs en béton, on peut citer, les places de stationnement, les allées de voitures, l'entrée de garages, les chaussées pour piétons, les allées de parc et jardins, les pistes cyclables, les ronds points, les ralentisseurs, etc.

Les sols extérieurs sont soumis à diverses sollicitations (physiques, mécaniques, chimiques, etc.) ainsi qu'à l'influence des conditions climatiques, en particulier au gel. Ils sont conçus pour résister au trafic, à la circulation piétonne et aux intempéries. Toutefois, malgré une sélection rigoureuse de la composition du béton à couler pour réaliser le sol extérieur, le respect de certaines précautions (par ex. faible rapport eau/ciment (E/C), réseau de bulles d'air entrainé adéquat, etc.) et le respect des règles de bonne pratique en matière de mise en œuvre et de cure, il arrive encore fréquemment que les sols extérieurs en béton subissent d'importants désordres, parfois irréversibles. Parmi ces désordres, l'écaillage dû aux cycles de gel-dégel en présence de sels de déverglaçage constitue une des principales causes de la dégradation prématurée des sols en béton (par ex. allées de véhicules, entrée de garages, etc.).

Par « écaillage » on entend dans le cadre de la présente invention la désagrégation des surfaces de béton provoquée par leur exposition aux successions des cycles gel/dégel en présence de sels de déverglaçage (appelés également sels fondants ou déglaçants). Généralement, l'apparition d'écaillage commence par de petites zones localisées, qui par la suite peuvent se rejoindre, s'étendre et affecter de grandes surfaces.

A titre d'exemple de sels les plus couramment utilisés pour le déverglaçage des sols extérieurs, on peut citer le chlorure de sodium et le chlorure de calcium. Ces sels servent à l'enlèvement de la neige et de la glace en abaissant la température de fusion de l'eau, en vue de mener des actions préventives en hiver pour éviter que la glace ne se forme sur les routes. Ils constituent un facteur déterminant dans l'écaillage.

Les mécanismes exacts du phénomène d'écaillage sont à l'heure actuelle encore mal compris. De nombreux chercheurs se sont attaqués aux problèmes d'écaillage. Ils ont déjà proposé des mécanismes, mais tous s'accordent à dire que le phénomène d'écaillage est particulièrement difficile à modéliser et à prévenir, en raison du grand nombre de variables qui peuvent être impliquées dans le processus de désagrégation : la porosité, la perméabilité et le degré d'humidité de la surface du sol en béton; les conditions climatiques qui peuvent être parfois très rudes ; la concentration et le type de sels de déverglaçage qui peuvent être très variables, mais aussi les modalités de mise en place et de finition du béton, le degré de maturité du béton au moment du processus de déverglaçage, etc.

Selon une technique bien connue dans l'art antérieur, on renforce le béton au cours de sa fabrication avec un produit de protection à base de poudrette de caoutchouc, de sels de polynaphtalène sulfonate, et des sels de lignosulfonate (voir WO93/14042 (PIERI S.A.)). Ce produit de protection aurait pour effet de réduire la perte de masse par écaillage en deçà de 400 g/m². Toutefois, ce produit pose un problème potentiel pour la santé et l'environnement et ses performances mécaniques à long terme de ne sont pas à la hauteur des attentes exprimées par les usagers et les fabricants de sols en béton.

L'art antérieur peut également être illustré par exemple par les documents de brevets suivants: DE 102010003919 A1, WO 2012/084401 A1, WO 2012/023874 A2, WO 99/57076 A1, GB 2262521 A et KR 20050040898 A. En particulier,:
- Le document DE 102010003919 A1 concerne l'utilisation de matériaux de construction secs contenant un ou plusieurs polymères, sous la forme de poudres redispersibles dans l'eau, et, éventuellement, des liants minéraux, des charges, ainsi que des additifs, pour le traitement de surface de fonds pas encore complètement durcis à base de ciment.
- Le document WO 2012/084401 A1, concerne une composition à prise hydraulique, en particulier pour la fabrication de béton, mortier, revêtement de sol coulé ou enduit, à résistance au gel-dégel améliorée, comprenant les ingrédients ciment, additifs, composés de silicium organofonctionnels ainsi qu'éventuellement des agrégats et éventuellement des adjuvants.
- le document WO 2012/023874 A2 est relatif à une composition cimentaire « classique » à base de ciment Portland, de granulats, d'additifs et d'eau, pour la construction d'infrastructures routières, notamment par application sur une couche de granite préexistante.
- Le document WO 99/57076 A1 porte sur une formulation à l'état sec pour matériau de marquage intégré utilisable dans les applications propres au béton et à l'asphalte, qui renferme un mélange à base de ciment, y compris un liant hydraulique ou à base de ciment, un modificateur de ciment polymère redispersible, une charge à agent rétroréfléchissant et, éventuellement, une charge à agent réfléchissant.
- le document GB 2262521 A concerne des matériaux cimentaires comprenant du ciment Portland, de l'eau et au moins un polymère de renforcement compatible tel que l'alcool polyvinylique, conjointement avec des particules d'agrégat telles que du sable, lesquels matériaux cimentaires présentent sous la forme d'une feuille non durcie qui peut être pressée contre une surface par ex en béton, puis laissée durcir.
- Le document KR 20050040898 A concerne un procédé de construction de chaussées en béton creux ayant les pores en surface remplis d'une matière de charge choisie parmi les émulsion de résines, un mélange de silice, et de pigments ou de minéraux.

Dans les circonstances décrites ci-dessus, le but de la présente invention est de fournir un produit qui permette d'améliorer la durabilité des sols extérieurs en béton, en particulier des sols extérieurs en béton obtenus selon le principe de la chape refluée ou du coulis rapporté sur un béton support.

Un but complémentaire de l'invention est de fournir un tel produit qui puisse être appliqué sur les dalles ou sols en béton fraîchement mises en place pour améliorer leur résistance, après prise et durcissement, à l'écaillage dû aux cycles de gel-dégel en présence de sels de déverglaçage.

Un autre but de l'invention est de fournir un produit du type précédent qui soit bon marché, facile à préparer et stable, qui ne contient pas de composés particulièrement néfastes pour l'environnement, et qui soit d'une application aisée sur la dalle ou sols en béton fraîchement mise en place.

L'invention vise également à fournir un sol extérieur dont les performances, notamment la résistance à l'écaillage dû aux cycles de gel-dégel en présence de sels de déverglaçage et la résistance à l'usure et au poinçonnement, dû notamment au trafic et à la circulation piétonne, sont améliorées par rapport aux sols extérieurs connus de l'art antérieur.

L'invention a également pour objectif de fournir un procédé de traitement d'une dalle ou sol de béton fraîchement coulée en vue de protéger la surface exposée de ladite dalle ou sol contre l'écaillage causé notamment par les cycles de gel-dégel en présence de sels de déverglaçage.

L'invention a aussi pour objectif de fournir un tel procédé qui permette d'obtenir un aspect visuel choisi au préalable ; ou des surfaces à vocation esthétique.

L'invention a aussi pour objectif de fournir un tel procédé qui soit simple à mettre en œuvre et qui ne nécessite pas d'autres appareillages que ceux dont sont classiquement équipés les fabricants de sols.

### Divulgation de l'invention.

La présente invention est définie dans les revendications indépendantes. Des variantes préférées sont définies dans les revendications dépendantes. En particulier, la présente invention concerne un produit de finition d'un sol extérieur en béton fraîchement coulé selon la revendication 1.

La Demanderesse a eu le mérite de découvrir que, de façon tout à fait surprenante et inattendue, l'application du produit de finition tel que défini ci-dessus sur un béton fraîchement coulé permet d'obtenir une couche superficielle adhérente au béton qui, après prise et durcissement, présente une excellente résistance à l'écaillage dû aux cycles de gel-dégel en présence de sels de déverglaçage. Cette résistance à l'écaillage a été mesurée conformément aux prescriptions de la norme XP P 18-420 et est avantageusement représentée par une quantité de particules écaillées inférieure à 150 g/m² après 56 cycles.

Par « béton frais » ou « béton fraîchement coulé » ou « béton fraîchement mis en place », il faut comprendre que le béton (ou dalle de béton) coulé ou mis en place est encore humide, notamment dans les couches superficielles, et qu'il n'a pas encore pris en masse puis durci. Ces expressions incluent également le béton (ou dalle de béton) fraîchement coulé dont la surface extérieure (ou exposée) a subi un talochage en une ou plusieurs passes. Par « béton », on désigne selon la présente invention une dalle ou sol en béton, de préférence un sol extérieur en béton.

Par ailleurs, le produit de finition de l'invention présente l'avantage d'être facile à obtenir à partir de produits très répandus dans le commerce, non-toxiques et compatibles avec le béton à finir et à protéger ; de présenter une très bonne stabilité en conservation à l'état sec; et d'être facile à appliquer sur le béton frais ou dalle de béton fraîchement coulé.

La Demanderesse a aussi constaté que le béton ou sol extérieur en béton, revêtu d'une telle couche superficielle présente également, une fois durci, une très bonne résistance à l'usure et au poinçonnement, notamment dû aux passages répétés de véhicules et à la circulation piétonne.

D'autres caractéristiques préférées de l'invention sont listées ci-dessous, chacune de ces caractéristiques pouvant être considérée seule ou en combinaison avec les caractéristiques remarquables définies ci-dessus :
- la fumée de silice a préférentiellement un diamètre particulaire moyen compris entre 50 microns et 200 microns et dont la surface spécifique B.E.T va de 20 m²/g à 30 m²/g.
- le produit selon l'invention comprend avantageusement :
   - 32% p/p_{produit de finition} de liant hydraulique,
   - 2,3% p/p_{produit de finition} de fumée de silice,
   - 7,6% p/p_{produit de finition} de sable fin,
   - 53,5% p/pproduit _{de finition} de sable moyen,
   - 0,9% p/p_{produit de finition} de résines polymères, de préférence de résine de copolymère styrène-butadiène, et
   - 3,7% p/p_{produit de finition} de pigments.
- le produit de finition selon l'invention se présente avantageusement sous une forme pulvérulente.
- Le produit de finition selon l'invention est avantageusement gâché avec une quantité donnée d'eau pour obtenir un mortier dudit produit.

Un autre aspect de l'invention concerne, selon la revendication 6, un procédé de traitement d'une dalle de béton fraîchement coulé en vue de protéger la surface exposée de ladite dalle contre l'écaillage causé notamment par les cycles de gel-dégel en présence de sels de déverglaçage. Ce procédé est remarquable en ce qu'il comprend les étapes suivantes consistant à :
(i) couler du béton frais pour réaliser une dalle dont l'épaisseur est comprise entre 5 cm et 30 cm, de préférence entre 10 cm et 20 cm,
(ii) déposer au moins une couche d'un produit de finition conforme à l'invention, sur la surface de la dalle de béton fraîchement coulée.

Ce procédé permet d'obtenir, après prise et durcissement, une dalle de béton (ou sol extérieur en béton) présentant une couche superficielle adhérente au béton dont les performances mécaniques, en particulier la résistance à l'écaillage dû aux cycles de gel-dégel en présence de sels de déverglaçage, et la résistance à l'usure et au poinçonnement, sont nettement supérieures à celles du béton non traité. Un tel procédé est particulièrement simple, économique et facile à mettre en œuvre, dans la mesure où il peut être réalisé avec principalement les machines utilisées habituellement par les fabricants de sols en béton sans investissements majeurs.

D'autres caractéristiques préférées de ce procédé sont listées ci-dessous, chacune de ces caractéristiques pouvant être considérée seule ou en combinaison avec les caractéristiques remarquables définies ci-dessus :
- on peut prévoir préalablement à l'étape (ii) et après l'étape (i), une étape (i-a) dans laquelle la dalle de béton fraîchement coulée est talochée en au moins deux passes successives.
- le béton mis en œuvre à l'étape (i) est avantageusement de la classe de résistance C25/30, C30/37 ou C35/45 selon la norme NF EN 206-1 ; présente une teneur en ciment de type CEM I 52.5 ou CEM II 42.5 comprise entre 330 kg/m³ et 350 kg/m³, un rapport eau/ciment compris entre 0,45 et 0,60, et une consistance de type S3 ou S4 selon la norme NF EN 206-1 ; et comprend des charges minérales telles que du sable et des gravillons, lesquelles charges ont une Dₘₐₓ comprise entre 10 mm et 14 mm, et sont caractérisées par un rapport gravillons/sable (G/S) compris entre 0.8 et 1.25.

- le produit de finition est avantageusement mis en œuvre par saupoudrage et en une quantité allant de 4 kg/m² à 6 kg/m² de dalle de béton fraîchement coulée.
- On peut également prévoir de déposer le produit de finition se présentant sous forme de mortier selon l'invention, par coulage en une quantité suffisante pour obtenir une couche dudit produit dont l'épaisseur est comprise entre 5 mm et 20 mm, de préférence entre 8 mm et 12 mm, préférentiellement d'environ 10 mm.
- l'étape ii) est préférentiellement mise en œuvre au maximum dans les deux heures qui suivent le coulage du béton frais.
- le procédé de l'invention est avantageusement mis en œuvre à une température ambiante comprise entre 5°C et 40°C.
- le procédé de l'invention comprend en outre une étape iii) consistant à soumettre la surface apparente du béton traité à l'étape (ii) à une opération de talochage et de lissage, suivie le cas échéant d'un traitement de surface, à l'état frais ou à l'état durci, pour créer un effet esthétique et/ou un motif décoratif sur ladite surface apparente.

Encore un autre aspect de l'invention concerne, selon la revendication 14, un sol extérieur comprenant une couche de béton. Ce sol extérieur est remarquable en ce que ladite couche en béton est revêtue d'une couche de produit de finition conforme à la présente invention, et le cas échéant en ce qu'il est obtenu par le procédé selon l'invention.

D'autres caractéristiques préférées de ce sol extérieur sont listées ci-dessous, chacune de ces caractéristiques pouvant être considérée seule ou en combinaison avec les caractéristiques remarquables définies ci-dessus :
- la quantité de particules écaillées mesurée selon la norme XP P 18-420 est inférieure à 150 g/m² après 56 cycles.
- le sol présente, après durcissement :
   - une résistance à l'usure BCA selon la norme NF EN 13892-4, caractérisée par une perte d'épaisseur du sol béton inférieure à 0,3 mm ; et
   - une résistance au poinçonnement selon la norme NF EN 13892-6, caractérisée par une dureté supérieure à 550 N/mm².

Encore un autre aspect de l'invention concerne, selon la revendication 17, une utilisation d'un produit de finition conforme à la présente invention pour la finition d'un sol, extérieur ou extérieur, en béton fraîchement coulé et le renforcement de :
- la résistance dudit sol contre les effets des cycles de gel-dégel en présence de sels de déverglaçage, et/ou
- la résistance dudit sol au poinçonnement et à l'abrasion.

D'autres buts et avantages de la présente invention apparaîtront au cours de la description qui va suivre qui n'est donnée qu'à titre indicatif et qui n'a pas pour but d'en limiter la portée.

### Description détaillée

Divers modes de réalisation, y inclus ceux objets des revendications 1 à 17, sont divulgués dans la présente description détaillée.

Dans le cadre de la présente invention et sauf mention différente dans le texte, on entend par :
- «finition» : le traitement d'un béton ou d'une dalle ou sol de béton fraîchement coulé pour lui donner un aspect final désiré, stable, dur et résistant notamment à l'écaillage dû à la répétition des cycles de gel-dégel et aux sels de déverglaçage. Le terme « finition » inclut aussi le cas échéant la création, sur la surface du béton traité et non-durci, d'un effet esthétique attrayant tel qu'un aspect coloré ; et/ou un aspect taloché gros à lissé avec tous les aspects intermédiaires bien connus de l'Homme de l'art ; et/ou un profilé décoratif par application de tampons, de toiles, de films, de moules ou de matrices sur la surface plane à la surface du béton traité et à l'état frais. Le terme « finition » peut également inclure d'autres traitements de surfaces du béton (ou dalle de béton) durci, tels que le : décapage par projection d'abrasifs, brossage, bouchardage, ponçage, martelage, bosselage, grenaillage, ou autres.
- « liant hydraulique » : un matériau minéral qui, mélangé avec de l'eau, forme une pâte qui fait prise et durcit par suite de réactions et de processus d'hydratation, et qui conserve sa résistance et sa stabilité même sous l'eau après durcissement.
- « prise » : le passage à l'état solide d'un liant hydraulique par réaction chimique d'hydratation. La prise est généralement suivie par la phase de durcissement.
- « durcissement » : l'augmentation des résistances mécaniques d'un liant hydraulique, après la fin de la phase de prise.
- « charges inertes inorganiques » : des matériaux minéraux du type sable, graviers, ou gravillons; ou des coproduits de l'industrie métallurgique tels que du carbure de silicium ; ou des matériaux métalliques tels que la grenaille d'acier ou de fonte ; ou de leurs mélanges.
- « fumée de silice » : une silice fine issue de l'industrie de la fabrication du silicium ou des alliages à base de silicium et dont la composition chimique répond préférentiellement à la norme NF EN-13263-1 et 2.
- « béton » : ce terme inclut également les mortiers dans lesquels il y a généralement plus de particules fines (par ex. sable) que de particules grossières (par. ex. sable gros, graviers).

Les pourcentages, teneurs et rapports utilisés ci-dessous sont donnés tous par rapport au poids sec total du produit de finition de l'invention et représentés par « p/p_{produit de finition}», sauf indication contraire.

La présente invention est basée sur la découverte que l'application d'un produit de finition pulvérulent contenant un mélange composé de : (a) 25% à 38% p/p_{produit de finition} d'un liant hydraulique, (b) 60% à 65% p/p_{produit de finition} de charges inertes inorganiques, (c) 2% à 4% p/p_{produit de finition} de fumée de silice, et les cas échéant d) jusqu'à 7% p/p_{produit de finition} d'un additif sélectionné dans le groupe constitué par des résines polymères, le cas échéant, en mélange avec des pigments ; sur la surface humide d'un béton encore frais permet d'améliorer les caractéristiques mécaniques du béton durci, en particulier sa résistance à l'écaillage dû aux cycles de gel-dégel en présence de sels de déverglaçage et sa résistance à l'usure et au poinçonnement.

L'amélioration de ces caractéristiques mécaniques du béton durci, peut être expliquée par le fait que le produit selon l'invention :
- réagit avec l'eau à la surface exposée du béton frais, fait prise et durci après quelques heures (par ex. de 3 à 6 heures à température ambiante comprise entre 5°C et 40°C), pour former une couche superficielle dense, résistante et peu poreuse qui protège le béton fraîchement coulé contre l'évaporation de l'eau nécessaire à sa prise, d'une part, et
- se mélange en partie et/ou interagit en partie chimiquement avec les couches supérieures du béton frais pour obtenir une excellente adhérence entre la couche superficielle et le béton, d'autre part.

Par ailleurs, l'absorption de l'eau excédentaire par le produit selon l'invention est également utile pour éviter que le béton (ou dalle de béton) fraîchement coulé ne soit trop humide au cours de sa prise et de son durcissement.

Il convient de préciser que l'eau à la surface du béton fraîchement mis en place doit être suffisante pour permettre l'hydratation du produit selon l'invention et donc la finition et la protection du béton (ou dalle de béton) et éviter la dessiccation prématurée du béton.

Le liant hydraulique utilisable dans le cadre de la présente invention est préférentiellement un ciment sélectionné parmi les ciments suivants :
- ciment Portland CEM I 52,5 N PM CE conforme à la norme française NF EN 197-1 et présentant des caractéristiques complémentaires pour «travaux à la mer » (PM) suivant norme NF P15-317 et pour « travaux en eaux à haute teneur en sulfates » (ES) suivant norme XP P 15-319 ; et
- ciment Portland composé CEM ll/A-LL 42,5 N CE « Blanc » conforme à la norme NF EN 197-1 et présentant des caractéristiques complémentaires pour « travaux à la mer » (PM) suivant la norme NF P 15-317.

Ces ciments ont donné d'excellents résultats en termes de résistance à l'écaillage dû aux cycles de gel-dégel en présence de sels de déverglaçage, de résistance à l'usure et au poinçonnement. Le liant hydraulique est présent dans le produit de finition à raison de 25% à 38% p/p_{produit}. Les meilleurs résultats, notamment en terme de résistance à l'écaillage, ont été obtenus avec 25 % à 38% p/p_{produit de finition} en liant hydraulique.

Les charges inertes inorganiques utilisées sont ajoutées au produit selon l'invention pour notamment améliorer la stabilité et les performances mécaniques de la couche superficielle revêtant le béton (ou sol ou dalle de béton) traité selon la présente invention, en particulier sa résistance à l'écaillage dû aux cycles de gel-dégel en présence de sels de déverglaçage, et sa résistance à l'usure, au poinçonnement. Avantageusement, elles présentent une granulométrie inférieure à 3 mm, de préférence allant de 0,2 mm à 2,5 mm. Préférentiellement, elles sont roulées et lavées.

Selon une première variante on utilise comme charges inertes inorganiques :
- du sable fin présentant une granulométrie de 0,2 mm à 0,5 mm et dont la taille de grain D50 est comprise entre 320 microns et 360 microns, de préférence égale à 345 micron, et
- du sable moyen présentant une granulométrie de 0,4 mm à 0,8 mm et dont la taille de grains D50 est comprise entre 580 microns et 610 microns, de préférence égale à 593 microns,
- et, le cas échéant, du sable gros présentant une granulométrie de 0,6 mm à 1,6 mm et dont la taille de grains D50 est comprise entre 920 microns et 960 microns, de préférence égale à 940 microns.

Selon une autre variante on utilise comme charges inertes inorganiques :
- du sable moyen présentant une granulométrie de 0,4 mm à 0,8 mm et dont la taille de grains D50 est comprise entre 580 microns et 610 microns,
- et, du sable gros présentant une granulométrie de 1,0 mm à 2,5 mm et dont la taille de grains D50 est comprise entre 1660 microns et 1740 microns.

Toutes les dimensions de sable (fin, moyen ou gros) sont disponibles dans le commerce. Elles peuvent par exemple être obtenues auprès de la société SIBELCO®.

Selon encore une autre variante on utilise comme charges inertes inorganiques:
- de la grenaille de fonte fine présentant une granulométrie comprise entre 0,18 et 0,42 mm,
- de la grenaille de fonte moyenne présentant une granulométrie comprise entre 0,42 mm et 0,84 mm,
- et, de la grenaille de fonte moyenne grosse présentant une granulométrie comprise entre 1 mm et 1,4 mm.

Toutes les dimensions de grenailles de fonte (fines, moyennes ou grosses) sont disponibles dans le commerce. Elles peuvent par exemple être obtenues auprès de la société ABRALIS®.

Les meilleurs résultats ont été obtenus lorsque le produit selon l'invention comprend de 60% à 65% p/p_{produitde finition} de charges inertes inorganiques.

Les charges inertes inorganiques peuvent également contribuer à l'aspect esthétique final du béton (ou dalle ou sol de béton) après prise et durcissement.

Avantageusement, le produit selon l'invention comprend également de 2% à 4% p/p_{produit de finition} de fumée de silice.

La fumée de silice utilisée présente avantageusement une teneur en silice (SiO₂) supérieure à 80%, préférentiellement supérieure à 95% en poids par rapport au poids total de la fumée de silice.

Elle se présente sous forme de poudre ayant une surface spécifique B.E.T allant de 20 m²/g à 30 m²/g et un diamètre particulaire moyen compris entre 50 microns et 200 microns.

La surface spécifique est une mesure de la surface réelle totale des particules, qui tient compte de la présence de reliefs, d'irrégularités, de cavités superficielles ou internes, de porosité. Elle est en pratique mesurée par application de la méthode B.E.T. d'après Brunauer, Emmettet Teller, J. Amer. Chem. Soc. 60, 309, 1938.

La fumée de silice contribue à améliorer les performances du produit selon l'invention, en particulier, elle :
- améliore la capacité du produit de l'invention à absorber et retenir l'humidité des couches supérieures du béton ou dalle de béton fraîchement coulé,
- réduit la porosité et la perméabilité de la couche superficielle revêtant le béton (ou dalle de béton), en la rendant, après prise et durcissement, moins sujette à la pénétration des sels de déverglaçage, ou autres agents chimiques agressifs,
- améliore la stabilité de la couche superficielle revêtant le béton (ou dalle de béton), et sa résistance à l'écaillage dû aux cycles de gel-dégel en présence de sels de déverglaçage.

Par ailleurs, la fumée de silice peut également se combiner à la chaux lors de l'hydratation du liant hydraulique, afin de donner des hydrates supplémentaires (silicates de calcium hydratés C-S-H) qui se déposent dans les vides ou pores capillaires susceptibles de se former dans la couche superficielle revêtant le béton (ou dalle de béton), et le, cas échéant, dans les couches supérieures du béton, et contribuent donc à les rendre compactes et denses.

La fumée de silice peut être de couleur blanche ou grise et peut aussi contribuer à l'aspect visuel final du béton ou dalle de béton, après prise et durcissement.

On peut par exemple utiliser comme fumées de silice celles commercialisées par la société CONDENSlL® sous la dénomination Condensil® S-95 DS ou Condensil® S-95 B DM.

Le produit selon la présente invention peut comprendre jusqu'à 7% p/p_{produit de finition} d'un additif sélectionné dans le groupe constitué par des pigments, des résines de polymères et leurs mélanges.

De préférence, les résines de polymères sont incorporées dans le produit de l'invention sous forme de poudre sèche non collante et/ou redispersable (appellation consacrée, "redispersible powder" en anglais). Il peut s'agir par exemple de polymères thermoplastiques, de polymères thermodurcissables, de polymères acryliques, de copolymères styrène-acrylique, de copolymères éthylène-acétate de vinyle, de copolymères d'acétate de vinyle et de versatate de vinyle (le versatate de vinyle étant une marque déposée pour les esters d'acides ramifiés en C₉-C₁₁), de copolymères styrène-butadiène, etc. Il convient de noter que le terme « résine redispersable » signifie que la résine de polymère se présentant initialement sous forme de dispersion aqueuse a été déshydratée par toute méthode connue de l'art et qu'elle peut contenir d'autres composants additionnels qui lui permettent de se redisperser aisément dans un milieu aqueux. On peut par exemple, utiliser des résines de polymère redispersables commercialisées par la société DAIREN® Chemical Corp sous les dénominations suivantes : DAIREN® DA-1200 et DAIREN® DA-1400 ; ou par la société DOW® Chemical Company sous les dénominations suivantes : Dow® latex Powder (DLP) 442, Dow® latex Powder (DLP) 2001, ou DrycrylTM® DP 9203 ; ou par la société WACKER® Chemie AG sous la dénomination Winnapas® RE 5011L.

La ou les résines de polymères éventuellement utilisées permettent d'améliorer encore davantage les performances du produit de l'invention. Elles contribuent en particulier à améliorer la protection du béton (ou dalle de béton) durci contre la pénétration des chlorures, en réduisant la perméabilité de la couche superficielle le revêtant, sans pour autant empêcher la respiration du béton durci. Elles permettent également de renforcer l'adhérence entre la couche superficielle et le béton (ou dalle de béton). Préférentiellement, la résine de polymère est une résine de copolymère styrène-butadiène et se présente avantageusement sous forme de poudre redispersable dans l'eau.

Quant aux pigments, naturels ou synthétiques, de préférence poudreux, éventuellement présents dans le produit selon l'invention, ils permettent d'obtenir des dalles ou sols extérieurs en béton traités avec un aspect final coloré. A titre d'exemple de pigments utilisables, on peut citer les oxydes ou hydroxydes inorganiques tels que le dioxyde de titane, les oxydes de fer, de cobalt ou de chrome, etc. Le produit de l'invention peut contenir un ou plusieurs pigments. Les pigments sont disponibles commercialement, notamment chez BAYER ou SCHOMBURG® ICS.

Le produit selon l'invention se présente sous une forme pulvérulente. De bons résultats sont obtenus lorsqu'il présente une granulométrie dont les particules ont un diamètre maximal inférieur à 3 mm, préférentiellement inférieur à 0,9 mm (c'est-à-dire au maximum du pic de leur distribution granulométrique). Il est susceptible d'être obtenu en mettant en œuvre toute méthode connue par ailleurs de l'homme du métier, comprenant une étape de mélange physique, à l'état sec, du liant hydraulique, de la fumée de silice, et des charges inertes inorganiques, et le cas échéant d'un ou plusieurs additifs. Il est avantageusement conservé sous cette forme pulvérulente à l'abri de l'humidité (par exemple en sac de mortier) avant son utilisation.

Le produit de finition peut également se présenter ou mis en œuvre sous la forme d'un mortier, de consistance plastique à pâteuse, obtenu par gâchage avec de l'eau préférentiellement dans un rapport massique entre l'eau et le produit allant de 0,12 à 0,16. Ce mortier est destiné à être répandu par coulage à la surface du béton ou dalle ou sol de béton) fraîchement coulé, taloché et lissé pour former une couche de protection superficielle adhérente au béton fini. Il conserve de bonnes capacités d'absorption et de rétention de l'eau excédentaire des couches supérieures du béton fraîchement coulé, et aussi de bonnes propriétés d'adhérence. Il permet aussi d'améliorer la résistance à l'écaillage dû aux cycles de gel-dégel en présence des sels de déverglaçage.

Conformément à l'invention, le traitement d'une dalle ou sol (notamment sol extérieur) de béton fraîchement coulée est réalisé en mettant en œuvre les étapes suivantes :
(i) coulage d'une dalle ou sol (notamment sol extérieur) de béton frais ;
(ii) dépôt d'au moins une couche d'un produit de finition conforme à l'invention, sur la surface extérieure (ou exposée) de la dalle ou sol (notamment sol extérieur) de béton fraîchement coulée.

Après prise et durcissement, la dalle ou sol (notamment sol extérieur) présente une couche superficielle adhérente au béton dont les performances mécaniques, en particulier la résistance à l'écaillage dû aux cycles de gel-dégel en présence de sels de déverglaçage, et la résistance à l'usure et au poinçonnement, sont nettement supérieures à celles du béton non traité.

Le coulage de la dalle -ou sol (notamment sol extérieur) (étape (i)) est réalisé jusqu'à l'obtention d'une épaisseur désirée de ladite dalle; en particulier une épaisseur comprise entre 5 cm et 30 cm, de préférence entre 10 cm et 20 cm.

De manière connue de l'homme de l'art, le béton fraîchement coulé contient au moins un liant hydraulique, des charges inertes inorganiques éventuellement de différentes granulométries, de l'eau, et le cas échéant un ou plusieurs composants additionnels qui peuvent contribuer à l'obtention de performances mécaniques recherchées. A titre d'exemple non limitatif de tels composants additionnels on peut citer : les plastifiants, les plastifiants réducteurs d'eau, les superplastifiants, les fluidifiants, les retardateurs de prise, les accélérateurs de prise, les agents expanseurs, les agents anti-moussant, les pigments, les éléments fins à réaction pouzzolanique telles que les cendres volantes et la fumée de silice; les fibres métalliques; les agents dispersants ; etc.

Préalablement à l'étape (i), le béton est préparé par toute méthode connue de l'homme de l'art, notamment par gâchage de ses constituants solides et de l'eau dans un malaxeur pour l'homogénéisation de la pâte de béton à couler.

Les meilleurs résultats en terme de performances mécaniques, notamment une excellente résistance à l'écaillage dû aux cycles de gel-dégel en présence de sels de déverglaçage, et une très bonne résistance à l'usure et au poinçonnement, ont été obtenus avec un béton de la classe de résistance C25/30, C30/37, ou C35/45 selon la norme NF EN 206-1. De préférence, ce béton présente une teneur en ciment de type CEM I 52.5 ou CEM II 42.5 comprise entre 330 kg/m³ et 350 kg/m³. Préférentiellement, ce béton a un rapport eau/ciment compris entre 0,45 et 0,60, et une consistance de type S2, S3 ou S4 selon la norme NF EN 206-1. Préférentiellement encore, ce béton comprend des charges minérales telles que du sable et des gravillons, lesquelles charges ont une Dₘₐₓ compris entre 6 mm et 22,4 mm, de préférence entre 10 mm et 14 mm, et sont caractérisées par un rapport gravillons/sable (G/S) compris entre 0.8 et 1.25.

L'étape de coulage (i) peut être mise en œuvre par toute méthode connue de l'homme de l'art, par exemple par gravité.

En pratique, après coulage de la dalle ou sol (notamment sol extérieur) de béton, on soumet la surface exposée de cette dernière à un talochage en une ou plusieurs passes, de préférence en au moins deux passes successives, de façon à lui donner un aspect régulier, plan et ferme.

De préférence, immédiatement, après le coulage de la dalle ou sol (notamment sol extérieur) de béton, et le cas échéant le talochage de sa surface exposée, et avant la prise et le durcissement du béton, on met en œuvre l'étape (ii) qui consiste à déposer au moins une couche d'un produit de finition conforme à l'invention, sur la surface extérieure (ou exposée) de la dalle ou sol (notamment sol extérieur) de béton. La durée maximale entre le moment où la dalle ou sol (notamment sol extérieur) de béton est coulé et le dépôt visé à l'étape (ii) est préférentiellement d'environ deux heures.

En pratique, l'épaisseur de la couche du produit de finition et de protection conforme à l'invention déposée est comprise entre 1 mm et 5 mm, de préférence est d'environ 2 mm.

Selon un mode de réalisation préféré du procédé de l'invention, l'étape (ii) est mise en œuvre par saupoudrage du produit conforme à l'invention sur la dalle ou sol (notamment sol extérieur) de béton fraîchement coulé. Préférentiellement, le saupoudrage est effectué manuellement, ou à la pelle, ou à l'aide de tout dispositif d'épandage de poudre sèche utilisé habituellement par les fabricants de sols.

On applique une quantité allant de 4 kg à 6 kg par mètre carré de dalle ou sol (notamment sol extérieur) de béton fraîchement coulée. Cette quantité donne d'excellents résultats en termes de résistance à l'écaillage dû aux cycles de gel-dégel en présence de sels de déverglaçage.

Selon un autre mode de réalisation préféré, l'étape (ii) est mise en œuvre par coulage, par tout moyen connu, du produit de finition conforme à l'invention, lequel produit se présente sous la forme d'un mortier de consistance plastique à pâteuse obtenu par gâchage avec de l'eau préférentiellement dans un rapport massique entre l'eau et le produit de finition et de protection pulvérulent allant de 0,12 à 0,16. Selon ce mode de réalisation, l'épaisseur de la couche déposée du produit conforme à l'invention est en pratique comprise entre 5 mm et 20 mm, de préférence entre 8 mm et 15 mm, préférentiellement d'environ 10 mm.

L'étape de préparation du béton, l'étape de coulage (i), l'étape (i-a) de talochage de la dalle ou sol (notamment sol extérieur) de béton coulée à l'étape (i) et l'étape de traitement de la dalle ou sol (notamment sol extérieur) de béton à l'étape (ii) sont préférentiellement mises en œuvre à une température ambiante, extérieure, comprise entre 5°C et 40°C.

Quelque soit le mode de réalisation choisi à l'étape ii) pour le dépôt du produit finition (par saupoudrage ou par coulage du mortier), on soumet la surface apparente de la dalle ou sol (notamment sol extérieur) de béton traitée et se trouvant encore à l'état frais (état non-durci), à un surfaçage permettant d'égaliser et aplanir le béton, d'augmenter sa compacité, et d'assurer un fini de surface désiré allant d'un aspect taloché grossier à un aspect lisse. Typiquement, le surfaçage est réalisé à l'aide d'outils du type taloches manuelles ou mécaniques et/ou de lisseuses rotatives, et est effectué en plusieurs passes successives, le délai entre deux passes successives dépendant de la cinétique de prise du béton, laquelle cinétique est liée à la nature des composants utilisés pour préparer le béton, de leur teneur, du rapport Eau/Ciment, et des modalités et de la température de mise en œuvre.

On peut aussi déposer au moins un agent démoulant coloré sur la surface apparente talochée et lissée du béton traité à l'étape (ii), et se trouvant encore à l'état frais, puis appliquer des moyens de texturation (par ex. moules, peaux de coffrage, tampons en matériaux élastomères ou autre) à ladite surface pour obtenir une dalle ou sol (notamment sol extérieur) de béton traitée, colorée et/ou imprimée combinant un effet esthétique et/ou décoratif aux très bonnes performances mécaniques obtenues grâce à l'invention.

La dalle ou sol (notamment sol extérieur) de béton traitée à l'étape (ii), ayant subi ou non un traitement de surfaçage et/ou de texturation, est séchée ou laissée à sécher. Elle est de préférence laissée à durcir à température ambiante comprise entre 5°C et 40°C. Dans des conditions hivernales, des moyens de protection (par ex. appareils de chauffage, couvertures, abris, paravents ou autres) peuvent être mis en œuvre pour limiter l'influence de températures extrêmes.

On peut également prévoir de soumettre, après durcissement, la surface apparente du béton lissé à une texturation, notamment, par : décapage par projection d'abrasifs, brossage, ponçage, martelage, bouchardage, bosselage, grenaillage ou autre, pour obtenir un aspect final désiré de la dalle ou sol (notamment sol extérieur) de béton fabriqué.

De manière plus générale, on peut obtenir une dalle ou sol (notamment sol extérieur) de béton comprenant une couche de béton revêtue d'une couche de produit de finition suivant l'invention. Le cas échéant, ce sol ou dalle est obtenu par le procédé de traitement défini précédemment.

Il a été constaté que la dalle de béton traitée et le sol extérieur en béton obtenus selon la présente invention, ayant un aspect esthétique particulier ou non, sont stables, sans fissures et non-poussiéreux, et présentent l'avantage d'être très résistants à l'écaillage dû aux cycles de gel-dégel en présence de sels de déverglaçage. Les essais menés conformément à la norme XP P 18-420 ont montré que la quantité de particules écaillées mesurée est inférieure à 150 g/m² après 56 cycles.

Ils présentent aussi une très bonne résistance à l'usure et au poinçonnement, notamment dû aux passages répétés de véhicules et à la circulation piétonne. En effet, les essais menés conformément aux prescriptions des normes NF EN 13892-4 et NF EN 13892-6 ont montré, respectivement :
- une résistance à l'usure caractérisée par une perte d'épaisseur de la dalle ou du sol extérieur ou intérieur de béton inférieure à 0,3 mm et
- une résistance au poinçonnement caractérisée par une dureté supérieure à 550 N/mm².

Aussi, l'invention concerne également l'utilisation du produit de finition conforme à l'invention comme durcisseur de surfaces de sols en béton extérieurs et/ou intérieurs.

L'invention concerne l'utilisation d'un mélange comprenant : (a) 25% à 38% p/p_{produit de finition} d'un liant hydraulique ; (b) 60% à 65% p/p_{produit de finition} de charges inertes inorganiques ; (c) 2% à 4% p/p_{produit de finition} de fumée de silice ; et, le cas échéant, (d) jusqu'à 7%p/p_{produit de finition} d'un additif sélectionné dans le groupe constitué par des résines polymères, le cas échéant, en mélange avec des pigments; pour la finition d'un sol, extérieur ou intérieur, en béton fraîchement coulé et le renforcement de :
- la résistance dudit sol (après prise et durcissement) contre les effets des cycles de gel-dégel en présence de sels de déverglaçage, et/ou,
- la résistance dudit sol au poinçonnement et à l'abrasion.

Ce mélange agit en effet comme un durcisseur de surface de sols, extérieurs ou intérieurs, en béton fraîchement coulés. Il assure un renforcement superficiel desdits sols et améliore leur résistance à l'écaillage dû aux méfaits du gel et dégel en présence ou non de sels de déverglaçage. Il permet également d'améliorer la résistance de ces sols au poinçonnement et à l'abrasion. Par « sols intérieurs » on entend selon l'invention les sols abrités industriels ou non et les allées de garage ou terrasses couvertes

Bien entendu, les différentes caractéristiques de l'invention sont susceptibles d'être combinées entre elles.

L'invention va maintenant être décrite en référence à l'exemple suivant donné à titre illustratif et non limitatif.

### Exemple de produit de finition et de protection selon l'invention.

On a préparé les produits de finition et de protection I, Il et III -selon l'invention à partir des ingrédients indiqués dans le tableau ci-dessous, par mélangeage mécanique, dans un malaxeur discontinu à pales, assurant la défloculation mécanique des poudres et l'homogénéisation.

| **Ingrédients** | **Proportion pondérale (p/p_{produit})** | | |
|---|---|---|---|
| | I | II | III |
| Liant hydraulique ¹) | 32% | 32% | 33,3% |
| Fumée de silice²) | 2,3% | 2,3% | 2,4% |
| Sable fin | 7,6% | | |
| Sable moyen | 53,5% | 30,55% | |
| Sable gros | | 30,55% | |
| Grenaille de fonte fine | | | 11,9% |
| Grenaille de fonte moyenne | | | 23,8% |
| Grenaille de fonte grosse | | | 27,7% |
| Résine de copolymère styrène-butadiène³) | 0,9% | 0,9% | 0,9% |
| Pigments | 3,7% | 3,7% | |

| | | | |
|---|---|---|---|
| ¹) Le liant hydraulique utilisé dans : - exemples 1 et 2 : ciment Portland CEM I 52,5 N PM-ES CE « EXTREMAT® » commercialisé par la société VICAT® » ; - exemple 3 : ciment CEM II/A-LL 42,5 N PM-CP2 « Blanc » NF CE, de l'usine du TEIL », commercialisé par la société LAFARGE® CIMENTS, ²) La fumée de silice utilisée est : Condensil® S-95 DS commercialisée par la société CONDENSIL®. ³) La résine utilisée est : Winnapas® RE 5011L commercialisée par WACKER® Chemie AG. | | | |

Les produits I, Il et III obtenus se présentent sous forme de poudre grenue ayant une répartition granulométrique (déterminée par analyse granulométrique selon NF EN 933-1) comprise entre 0,01 mm et 0,8 mm pour le produit I ; entre 0,01 mm et 2,5 mm pour le produit II ; et entre 0,01 mm et 1,4 mm pour le produit III,

Les produits de finition I, Il et III présentent les caractéristiques suivantes :
- très bonne stabilité.
- très bonne conservation au stockage à sec et à l'abri de la lumière.
- très bonne compatibilité avec une large gamme de bétons non-durcis.
- très faciles à appliquer sur le béton fraîchement déposé (non-durci).
- faciles à préparer à partir d'ingrédients largement disponibles dans le commerce.

Ces produit sont appliqués sur du béton fraîchement coulé, lequel béton est avantageusement choisi parmi les bétons de la classe de résistance C25/30, C30/37 ou C35/45 selon la norme NF EN 206-1 ; présentant une teneur en ciment de type CEM I 52.5 ou CEM II 42.5 comprise entre 330 et 350 kg/m³, un rapport eau/ciment compris entre 0,45 et 0,60, et une consistance de type S2, S3 ou S4 selon la norme NF EN 206-1 ; et comprenant des charges minérales telles que du sable et des gravillons, lesquelles charges ont un diamètre maximal (Dₘₐₓ) compris entre 6 mm et 22,4 mm, de préférence entre 10 mm et 14 mm, et sont caractérisées par un rapport gravillons/sable (G/S) compris entre 0.8 et 1.25.
a) Les essais d'écaillage dû aux cycles de gel-dégel en présence de sels de déverglaçage ont été effectués conformément aux prescriptions de la norme XP P 18-420.

| Nombre de cycles | Quantité de particules écaillées^{*} | |
|---|---|---|
| | Produit I | Produit III |
| 7 cycles | < 30 g/m² | < 5 g/m² |
| après 28 cycles | < 80 g/m² | < 10 g/m2 |
| après 56 cycles | < 130 g/m2 | < 20 g/m² |

| | | |
|---|---|---|
| * médiane des valeurs mesurées | | |

Ces résultats montrent que le traitement en surface du béton (ou sol extérieur en béton) fraîchement coulé avec les produits de finition selon la présente invention, permet d'améliorer la résistance, après prise et durcissement, dudit béton à l'écaillage dû aux cycles de gel-dégel en présence de sels de déverglaçage, puisque les valeurs obtenues (quantité de particules écaillées) sont largement inférieures à 600 g/m² qui est la limite supérieure habituellement recommandée pour les bétons soumis au salage fréquent, voire très fréquent. De façon inattendue ces valeurs sont inférieures à 150 g/m².
b) Les essais d'évaluation da la résistance à l'usure BCA conformément aux prescriptions de la norme NF EN 13892-4.
Pour le produit de finition I, les résultats ont montré une perte d'épaisseur du sol inférieure à 0,2 mm.
c) Les essais d'évaluation de la résistance au poinçonnement ont été réalisés conformément aux prescriptions de la norme NF EN 13892-4.

Pour le produit de finition I, les résultats ont montré une dureté supérieure à 600 N/mm².

Quant au produit de finition II, il ne comprend pas de sable fin, et présente en plus des bons résultats obtenus avec le produit de finition I, la faculté :
- de fournir, après saupoudrage, une couche moins pâteuse à la surface du béton frais,
- de garantir une meilleure accroche sur les couches superficielles du béton frais.

## Revendications

1. Produit de finition pour application sur un sol extérieur en béton fraîchement coulé, comprenant un mélange composé de :
(a) 25% à 38% p/p_{produit de finition} d'un liant hydraulique ;
(b) 60% à 65% p/p_{produit de finition} de charges inertes inorganiques ;
(c) 2% à 4% p/p_{produit de finition} de fumée de silice ; et
(d) jusqu'à 7% p/p_{produit de finition} d'un additif sélectionné dans le groupe constitué par des résines polymères, le cas échéant, en mélange avec des pigments;
ledit mélange assurant une protection dudit sol contre les effets des cycles de gel-dégel en présence de sels de déverglaçage,
▪ ledit liant hydraulique étant un ciment sélectionné parmi les ciments suivants :
- ciment Portland CEM I 52,5 N conforme à la norme NF EN 197-1 et présentant des caractéristiques complémentaires pour « travaux à la mer » (PM) suivant norme NF P15-317 et pour « travaux en eaux à haute teneur en sulfates » (ES) suivant norme XP P 15-319 ; et
- ciment Portland composé CEM ll/A-LL 42,5 N « Blanc » conforme à la norme NF EN 197-1 et présentant des caractéristiques complémentaires pour « travaux à la mer » (PM) suivant la norme NF P 15-317,
▪ ladite résine polymère étant une résine de copolymère styrène-butadiène se présentant de préférence sous forme de poudre redispersable dans l'eau, et
▪ lesdites charges inertes inorganiques étant sélectionnées dans le groupe constitué par :
- un mélange de sable fin présentant une granulométrie de 0,2 mm à 0,5 mm et dont la taille de grain D50 est comprise entre 320 microns et 360 microns, et de sable moyen présentant une granulométrie de 0,4 mm à 0,8 mm et dont la taille de grains D50 est comprise entre 580 microns et 610 microns, et le cas échéant de sable gros présentant une granulométrie de 0,6 mm à 1,6 mm et dont la taille de grains D50 est comprise entre 920 microns et 960 microns ; ,
- un mélange de sable moyen présentant une granulométrie de 0,4 mm à 0,8 mm et dont la taille de grains D50 est comprise entre 580 microns et 610 microns, et de sable gros présentant une granulométrie de 1,0 mm à 2,5 mm et dont la taille de grains D50 est comprise entre 1660 microns et 1740 microns ;
et,
- un mélange de la grenaille de fonte fine présentant une granulométrie comprise entre 0,18 et 0,42 mm, de la grenaille de fonte moyenne présentant une granulométrie comprise entre 0,42 mm et 0,84 mm, et, de la grenaille de fonte moyenne grosse présentant une granulométrie comprise entre 1,0 mm et 1,4 mm.

2. Produit de finition selon la revendication 1, **caractérisé en ce que** la fumée de silice a un diamètre particulaire moyen compris entre 50 microns et 200 microns et dont la surface spécifique B.E.T va de 20 m²/g à 30 m²/g.

3. Produit de finition selon l'une des revendications 1 à 2, **caractérisé en ce qu'**il comprend :
- 32% p/p_{produit de finition} dudit liant hydraulique,
- 2,3% p/p_{produit de finition} de fumée de silice,
- 7,6% p/p_{produit de finition} de sable fin,
- 53,5% p/p_{produit de finition} de sable moyen,
- 0,9% p/p_{produit de finition} de résine de copolymère styrène-butadiène, et
- 3,7% p/p_{produit de finition} de pigments.

4. Produit de finition selon l'une des revendications 1 à 3, **caractérisé en ce qu'**il se présente sous une forme pulvérulente.

5. Produit de finition selon l'une des revendications 1 à 4, **caractérisé en ce qu'**il est gâché avec une quantité donnée d'eau pour obtenir un mortier dudit produit.

6. Procédé de traitement d'une dalle de béton fraîchement coulée en vue de protéger la surface exposée de ladite dalle contre l'écaillage causé par les cycles de gel-dégel en présence de sels de déverglaçage, **caractérisé en ce qu'il** comprend les étapes suivantes consistant à :
(i) couler du béton frais pour réaliser une dalle dont l'épaisseur est comprise entre 5 cm et 30 cm, de préférence entre 10 cm et 20 cm,
(ii) déposer au moins une couche d'un produit de finition conforme à l'une des revendications 1 à 5, sur la surface de la dalle de béton fraîchement coulée.

7. Procédé selon la revendication 6, **caractérisé en ce qu'il** comprend en outre préalablement à l'étape (ii) et après l'étape (i), une étape (i-a) dans laquelle la dalle de béton fraîchement coulée est talochée en au moins deux passes successives.

8. Procédé selon la revendication 6 ou 7, **caractérisé en ce que** le béton mis en œuvre à l'étape (i) est de la classe de résistance C25/30, C30/37 ou C35/45 selon la norme NF EN 206-1 ; présente une teneur en ciment de type CEM I 52.5 ou CEM II 42.5 comprise entre 330 kg/m³ et 350 kg/m³, un rapport eau/ciment compris entre 0,45 et 0,60, et une consistance de type S3 ou S4 selon la norme NF EN 206-1 ; et comprend des charges minérales telles que du sable et des gravillons, lesquelles charges ont un diamètre maximal (Dₘₐₓ) compris entre 10 mm et 14 mm, et sont **caractérisées par** un rapport gravillons/sable (G/S) compris entre 0,8 et 1,25.

9. Procédé selon la revendication 6 ou 7, **caractérisé en ce qu'**à l'étape (ii) le produit de finition est mis en œuvre par saupoudrage et en une quantité allant de 4 kg à 6 kg par mètre carré de dalle de béton fraîchement coulée.

10. Procédé selon l'une des revendications 6 à 8, **caractérisé en ce qu'**à l'étape (ii) le produit de finition se présentant sous forme d'un mortier selon la revendication 7, est déposé par coulage et en une quantité suffisante pour obtenir une couche dudit produit dont l'épaisseur est comprise entre 5 mm et 20 mm.

11. Procédé selon l'une des revendications 6 à 10, **caractérisé en ce que** l'étape ii) est mise en œuvre au maximum dans les deux heures qui suivent le coulage du béton frais.

12. Procédé selon l'une des revendications 6 à 11, **caractérisé en ce qu'il** est mis en œuvre à une température ambiante comprise entre 5°C et 40°C.

13. Procédé selon l'une des revendications 6 à 12, **caractérisé en ce qu'il** comprend en outre une étape iii) consistant à soumettre la surface apparente du béton traité à l'étape (ii) à une opération de talochage et de lissage, suivie le cas échéant d'un traitement de surface, à l'état frais ou à l'état durci, pour créer un effet esthétique et/ou un motif décoratif sur ladite surface apparente.

14. Sol extérieur comprenant une couche de béton, **caractérisé en ce que** ladite couche en béton est revêtue d'une couche de produit de finition suivant l'une des revendications 1 à 5, et le cas échéant **en ce qu'**il est obtenu par le procédé selon l'une des revendications 6 à 13.

15. Sol extérieur selon la revendication 14, **caractérisé en ce qu'**après durcissement, la quantité de particules écaillées mesurée selon la norme XP P 18-420 est inférieure à 150 g/m² après 56 cycles.

16. Sol extérieur selon la revendication 14 ou 15, **caractérisé en ce qu'**il présente, après durcissement :
- une résistance à l'usure BCA selon la norme NF EN 13892-4, **caractérisée par** une perte d'épaisseur du sol en béton inférieure à 0,3 mm ; et
- une résistance au poinçonnement selon la norme NF EN 13892-6, **caractérisée par** une dureté supérieure à 550 N/mm².

17. Utilisation d'un produit de finition conforme à l'une des revendication 1 à 5
pour la finition d'un sol, extérieur ou intérieur, en béton fraîchement coulé et le renforcement de :
- la résistance dudit sol contre les effets des cycles de gel-dégel en présence de sels de déverglaçage, et/ou
- la résistance dudit sol au poinçonnement et à l'abrasion.

## Patentansprüche

1. Produkt zur Oberflächenbehandlung zum Aufbringen auf einen Boden aus frisch gegossenem Beton im Außenbereich, das eine Mischung umfasst, die zusammengesetzt ist aus:
(a) 25% bis 38% m/m_{Oberflächenbehandlungsprodukt} von einem hydraulischen Bindemittel;
(b) 60% bis 65% m/m_{Oberflächenbehandlungsprodukt} von anorganischen inerten Füllstoffen;
(c) 2% bis 4% m/m_{Oberflächenbehandlungsprodukt} Silikastaub; und
(d) bis zu 7% m/m_{Oberflächeribeharidlurigsprodukt} von einem Zusatzstoff, der aus der Gruppe ausgewählt ist, die von Polymerharzen gebildet wird, gegebenenfalls gemischt mit Pigmenten;
wobei die Mischung für einen Schutz des Bodens gegen die Auswirkungen von Frost-Tau-Wechseln in Gegenwart von Auftausalzen sorgt,
• wobei das hydraulische Bindemittel ein Zement ist, der aus folgenden Zementen ausgewählt ist:
- Portlandzement CEM I 52,5 N nach Norm NF EN 197-1, der ergänzende Eigenschaften für "Arbeiten im Meer" (PM) nach Norm NF P15-317 sowie für "Arbeiten in Wasser mit hohem Sulfatgehalt" (ES) nach Norm XP P 15-319 aufweist; und
- Portlandkompositzement CEM II/A-LL 42,5 N "weiß" nach Norm NF EN 197-1, der ergänzende Eigenschaften für "Arbeiten im Meer" (PM) nach Norm NF P 15-317 aufweist,
• wobei das Polymerharz ein Styrol-Butadien-Copolymerharz ist, das vorzugsweise als in Wasser redispergierbares Pulver vorliegt, und
• wobei die anorganischen inerten Füllstoffe aus der Gruppe ausgewählt sind, die aus Folgendem besteht:
- einer Mischung aus Feinsand mit einer Körnung von 0,2 mm bis 0,5 mm, dessen Korngröße D50 zwischen 320 Mikrometern und 360 Mikrometern liegt, und aus Mittelsand mit einer Körnung von 0,4 mm bis 0,8 mm, dessen Korngröße D50 zwischen 580 Mikrometern und 610 Mikrometern liegt, und gegebenenfalls aus Grobsand mit einer Körnung von 0,6 mm bis 1,6 mm, dessen Korngröße D50 zwischen 920 Mikrometern und 960 Mikrometern liegt;
- einer Mischung aus Mittelsand mit einer Körnung von 0,4 mm bis 0,8 mm, dessen Korngröße D50 zwischen 580 Mikrometern und 610 Mikrometern liegt, und aus Grobsand mit einer Körnung von 1,0 mm bis 2,5 mm, dessen Korngröße D50 zwischen 1660 Mikrometern und 1740 Mikrometern liegt;
und
- einer Mischung aus feinem Gusseisengranulat mit einer Körnung zwischen 0,18 und 0,42 mm, aus mittlerem Gusseisengranulat mit einer Körnung zwischen 0,42 mm und 0,84 mm und aus einem groben mittleren Gusseisengranulat mit einer Körnung zwischen 1,0 mm und 1,4 mm.

2. Produkt zur Oberflächenbehandlung nach Anspruch 1, **dadurch gekennzeichnet, dass** der Silikastaub einen mittleren Teilchendurchmesser zwischen 50 Mikrometern und 200 Mikrometern und eine spezifische BET-Oberfläche von 20 m²/g bis 30 m²/g aufweist.

3. Produkt zur Oberflächenbehandlung nach Anspruch 1 oder 2, **dadurch gekennzeichnet, dass** es Folgendes umfasst:
32% m/m_{Oberflächenbehandlungsprodukt} des hydraulischen Bindemittels,
2, 3% m/m_{Oberflächenbehandlungsprodukt} Silikastaub;
7, 6% m/m_{Oberflächenbehandlungsprodukt} Feinsand;
53, 5% m/m_{Oberflächenbehandlungsprodukt} Mittelsand;
0, 9% m/m_{Oberflächenbehandlungsprodukt} Styrol-Butadien-Copolymerharz, und
3, 7 % m/m_{Oberflächenbehandlungsprodukt} Pigmente.

4. Produkt zur Oberflächenbehandlung nach einem der Ansprüche 1 bis 3, **dadurch gekennzeichnet, dass** es in Pulverform vorliegt.

5. Produkt zur Oberflächenbehandlung nach einem der Ansprüche 1 bis 4, **dadurch gekennzeichnet, dass** es mit einer bestimmten Menge Wasser angerührt ist und so ein Mörtel aus diesem Produkt erhalten wird.

6. Verfahren zur Behandlung einer frisch gegossenen Betonplatte zum Schutz der freiliegenden Oberfläche der Platte vor Ausbrüchen, die von Frost-Tau-Wechseln in Gegenwart von Auftausalzen verursacht werden, **dadurch gekennzeichnet, dass** es folgende Schritte umfasst, die in Folgendem bestehen:
(i) Gießen von Frischbeton zum Herstellen einer Platte, deren Dicke zwischen 5 cm und 30 cm, vorzugsweise zwischen 10 cm und 20 cm beträgt,
(ii) Aufbringen von mindestens einer Schicht eines Produkts zur Oberflächenbehandlung nach einem der Ansprüche 1 bis 5 auf der Oberfläche der frisch gegossenen Betonplatte.

7. Verfahren nach Anspruch 6, **dadurch gekennzeichnet, dass** es ferner vor Schritt (ii) und nach Schritt (i) einen Schritt (i-a) umfasst, in dem die frisch gegossene Betonplatte in mindestens zwei aufeinanderfolgenden Durchläufen abgerieben wird.

8. Verfahren nach Anspruch 6 oder 7, **dadurch gekennzeichnet, dass** der in Schritt (i) eingesetzte Beton die Widerstandsklasse C25/30, C30/37 oder C35/45 nach Norm NF EN 206-1 erfüllt; einen Gehalt an Zement vom Typ CEM I 52.5 oder CEM II 42.5 zwischen 330 kg/m³ und 350 kg/m³ aufweist, ein Verhältnis Wasser/Zement zwischen 0,45 und 0,60 sowie eine Konsistenz vom Typ S3 oder S4 nach der Norm NF EN 206-1 aufweist und mineralische Füllstoffe wie Sand und Splitt umfasst, wobei die Füllstoffe einen Höchstdurchmesser (Dₘₐₓ) zwischen 10 mm und 14 mm aufweisen und durch ein Verhältnis Splitt/Sand (G/S) zwischen 0,8 und 1,25 gekennzeichnet sind.

9. Verfahren nach Anspruch 6 oder 7, **dadurch gekennzeichnet, dass** in Schritt (ii) das Produkt zur Oberflächenbehandlung durch Aufstreuen und in einer Menge von 4 kg bis 6 kg pro Quadratmeter frisch gegossener Betonplatte angewendet wird.

10. Verfahren nach einem der Ansprüche 6 bis 8, **dadurch gekennzeichnet, dass** in Schritt (ii) das Produkt zur Oberflächenbehandlung, das in Form eines Mörtels nach Anspruch 7 vorliegt, durch Gießen und in einer ausreichenden Menge aufgebracht wird, dass eine Schicht des Produkts erhalten wird, deren Dicke zwischen 5 mm und 20 mm liegt.

11. Verfahren nach einem der Ansprüche 6 bis 10, **dadurch gekennzeichnet, dass** Schritt ii) in höchstens zwei Stunden nach dem Gießen des Frischbetons durchgeführt wird.

12. Verfahren nach einem der Ansprüche 6 bis 11, **dadurch gekennzeichnet, dass** es bei einer Umgebungstemperatur zwischen 5°C und 40°C durchgeführt wird.

13. Verfahren nach einem der Ansprüche 6 bis 12, **dadurch gekennzeichnet, dass** es ferner einen Schritt iii) umfasst, der darin besteht, an der sichtbaren Oberfläche des in Schritt (ii) behandelten Betons einen Reib- und Glättvorgang vorzunehmen, woraufhin sich gegebenenfalls eine Oberflächenbearbeitung im frischen Zustand oder im ausgehärteten Zustand anschließt, damit auf der sichtbaren Oberfläche eine optisch ansprechende Wirkung erzielt und/oder ein Dekormuster hergestellt wird.

14. Boden im Außenbereich, der eine Betonschicht umfasst, **dadurch gekennzeichnet, dass** die Betonschicht mit einer Schicht aus dem Produkt zur Oberflächenbehandlung nach einem der Ansprüche 1 bis 5 versehen ist, und gegebenenfalls **dadurch gekennzeichnet, dass** er mit dem Verfahren nach einem der Ansprüche 6 bis 13 erhalten wird.

15. Boden im Außenbereich nach Anspruch 14, **dadurch gekennzeichnet, dass** nach dem Aushärten die Menge an abgebrochenen Teilchen, die nach Norm XP P 18-420 bestimmt ist, nach 56 Durchläufen unter 150 g/m² liegt.

16. Boden im Außenbereich nach Anspruch 14 oder 15, **dadurch gekennzeichnet, dass** er nach dem Aushärten Folgendes aufweist:
- einen Verschleißwiderstand nach BCA gemäß Norm NF EN 13892-4, **gekennzeichnet durch** einen Verlust der Dicke des Betonbodens von unter 0,3 mm; und
- eine Durchstanzfestigkeit nach Norm NF EN 13892-6, **gekennzeichnet durch** eine Härte von über 550 N/mm².

17. Verwendung eines Produkts zur Oberflächenbehandlung nach einem der Ansprüche 1 bis 5 zur Oberflächenbehandlung eines Bodens im Außen- oder Innenbereich aus frisch gegossenem Beton und zur Erhöhung:
- der Beständigkeit des Bodens gegenüber Auswirkungen von Frost-Tau-Wechseln in Gegenwart von Auftausalzen, und/oder
- der Durchstanz- und der Verschleißfestigkeit des Bodens.

## Claims

1. Finishing product for application to an exterior floor made of freshly poured concrete, comprising a mixture composed of:
(a) 25% to 38% W/W_{finishing product} of a hydraulic binder;
(b) 60% to 65% W/W_{finishing} product of inert inorganic fillers;
(c) 2% to 4% W/W_{finishing product} of silica fume; and
(d) up to 7% W/W_{finishing product} of an additive selected from the group consisting of polymer resins, where appropriate in a mixture with pigments;
said mixture endowing said floor with protection against the effects of freeze-thaw cycles in the presence of deicing salts,
▪ said hydraulic binder being a cement selected from the following cements:
- Portland cement CEM I 52.5 N conformant with standard NF EN 197-1 and having complementary characteristics for "sea-water resistance" (PM) in accordance with standard NF P15-317 and for "works using waters with high sulfate content" (ES) in accordance with standard XP P 15-319; and
- composite Portland cement CEM II/A-LL 42.5 N "White" conformant with standard NF EN 197-1 and having complementary characteristics for "sea-water resistance" (PM) in accordance with standard NF P15-317,
▪ said polymer resin being a styrene-butadiene copolymer resin in the form preferably of water-redispersible powder, and
▪ said inert inorganic fillers being selected from the group consisting of:
- a mixture of fine sand having a size grading of 0.2 mm to 0.5 mm and a particle size D50 of between 320 microns and 360 microns, and medium sand having a size grading of 0.4 mm to 0.8 mm and a particle size D50 of between 580 microns and 610 microns, and, where appropriate, coarse sand having a size grading of 0.6 mm to 1.6 mm and a particle size D50 of between 920 microns and 960 microns;
- a mixture of medium sand having a size grading of 0.4 mm to 0.8 mm and a particle size D50 of between 580 microns and 610 microns, and coarse sand having a size grading of 1.0 mm to 2.5 mm and a particle size D50 of between 1660 microns and 1740 microns;
and
- a mixture of fine cast-iron shot having a size grading of between 0.18 and 0.42 mm, medium cast-iron shot having a size grading of between 0.42 mm and 0.84 mm, and coarse cast-iron shot having a size grading of between 1.0 mm and 1.4 mm.

2. Finishing product according to Claim 1, **characterized in that** the silica fume has an average particle diameter of between 50 microns and 200 microns, and a BET specific surface area of from 20 m²/g to 30 m²/g.

3. Finishing product according to either of Claims 1 and 2, **characterized in that** it comprises:
- 32% W/W_{finishing product} of said hydraulic binder,
- 2. 3% W/W_{finishing product} of silica fume,
- 7. 6% W/W_{finishing product} of fine sand,
- 53.5% W/W_{finishing product} of medium sand,
- 0.9% W/W_{finishing product} of styrene-butadiene copolymer resin, and
- 3.7% W/W_{finishing product} of pigments.

4. Finishing product according to one of Claims 1 to 3, **characterized in that** it is in a pulverulent form.

5. Finishing product according to one of Claims 1 to 4, **characterized in that** it is mixed with a given amount of water to obtain a mortar of said product.

6. Method for treating a freshly poured concrete slab for protecting the exposed surface of said slab against the scaling caused by freeze-thaw cycles in the presence of deicing salts, **characterized in that** it comprises the following steps:
(i) pouring fresh concrete to produce a slab having a thickness of between 5 cm and 30 cm, preferably between 10 cm and 20 cm,
(ii) applying at least one layer of a finishing product conformant with one of Claims 1 to 5 to the surface of the freshly poured concrete slab.

7. Method according to Claim 6, **characterized in that** it further comprises, prior to step (ii) and after step (i), a step (i-a) in which the freshly poured concrete slab is floated in at least two successive passes.

8. Method according to Claim 6 or 7, **characterized in that** the concrete employed in step (i) is of strength class C25/30, C30/37 or C35/45 according to standard NF EN 206-1; has a CEM I 52.5 or CEM II 42.5 cement content of between 330 kg/m³ and 350 kg/m³, a water/cement ratio of between 0.45 and 0.60, and an S3 or S4 consistency according to standard NF EN 206-1; and comprises mineral fillers such as sand and fine gravels, said fillers having a maximum diameter (Dₘₐₓ) of between 10 mm and 14 mm and being **characterized by** a gravel/sand (G/S) ratio of between 0.8 and 1.25.

9. Method according to Claim 6 or 7, **characterized in that** in step (ii), the finishing product is employed by sprinkling in an amount of from 4 kg to 6 kg per square meter of freshly poured concrete slab.

10. Method according to one of Claims 6 to 8, **characterized in that** in step (ii), the finishing product is in the form of a mortar according to Claim 7 and is applied by pouring in an amount sufficient to obtain a layer of said product with a thickness of between 5 mm and 20 mm.

11. Method according to one of Claims 6 to 10, **characterized in that** step (ii) is implemented no later than two hours after the pouring of the fresh concrete.

12. Method according to one of Claims 6 to 11, **characterized in that** it is implemented at an ambient temperature of between 5°C and 40°C.

13. Method according to one of Claims 6 to 12, **characterized in that** it further comprises a step (iii) which comprises subjecting the visible surface of the concrete treated in step (ii) to an operation of floating and smoothing, followed where appropriate by a surface treatment, in the fresh state or in the hardened state, to create an aesthetic effect and/or a decorative pattern on said visible surface.

14. Exterior floor comprising a layer of concrete, **characterized in that** said layer of concrete is coated with a layer of finishing product according to one of Claims 1 to 5, and, where appropriate, **in that** it is obtained by the method according to one of Claims 6 to 13.

15. Exterior floor according to Claim 14, **characterized in that** after hardening, the amount of scaled particles, measured according to standard XP P 18-420, is less than 150 g/m² after 56 cycles.

16. Exterior floor according to Claim 14 or 15, **characterized in that** after hardening, it has:
- a BCA wear resistance according to standard NF EN 13892-4, **characterized by** a loss of thickness of the concrete floor of less than 0.3 mm; and
- an indentation resistance according to standard NF EN 13892-6, **characterized by** a hardness of more than 550 N/mm².

17. Use of a finishing product conformant with one of Claims 1 to 5 for finishing an interior or exterior floor made of freshly poured concrete, and the reinforcement of:
- the resistance of said floor to the effects of freeze-thaw cycles in the presence of deicing salts, and/or
- the resistance of said floor to indentation and to abrasion.
